# EUROPEAN PATENT SPECIFICATION

(11) **EP 2 547 627 B1**
(45) Date of publication and mention of the grant of the patent: **12.02.2020**
(21) Application number: 11717020.9
(22) Date of filing: 15.03.2011
(51) Int. Cl.: C02F 3/32, C02F 3/34

(54) **BIOLOGICAL PHYTODEPURATION DEVICE AND METHOD**
BIOTECHNOLOGISCHES PFLANZENREINIGUNGSSYSTEM UND VERFAHREN
SYSTÈME ET PROCÉDÉ DE PHYTO-ÉPURATION BIOTECHNOLOGIQUE

(30) Priority: 16.03.2010 IT TO20100198
(43) Date of publication of application: 23.01.2013
(73) Proprietor: Envitech Engineering (Environmental Technology Engineering) Sàrl, 1052 Le Mont-sur-Lausanne (CH)
(72) Inventor: MARENGO, Enrico, I-12065 Monforte d'Alba (Cuneo) (IT); GIOVANNETTI, Giusto, I-10123 Torino (IT)
(74) Representative: Freyria Fava, Cristina
(86) International application number: PCT/IB2011/051083
(87) International publication number: WO 2011/114290

(56) References cited:
- EP-A1- 1 414 756
- WO-A1-2008/029423
- JP-A- 5 168 348
- US-A- 5 951 866
- US-A1- 2002 121 046
- US-A1- 2007 261 299
- AVIS T J ET AL: "Multifaceted beneficial effects of rhizosphere microorganisms on plant health and productivity", SOIL BIOLOGY AND BIOCHEMISTRY, PERGAMON, OXFORD, GB LNKD- DOI:10.1016/J.SOILBIO.2008.02.013, vol. 40, no. 7, 1 July 2008 (2008-07-01), pages 1733-1740, XP022733623, ISSN: 0038-0717 [retrieved on 2008-05-06]
- NOAH FIERER: "Embracing the unknown: disentangling the complexities of the soil microbiome", NATURE REVIEWS. MICROBIOLOGY, vol. 15, no. 10, 21 August 2017 (2017-08-21), pages 579-590, XP055607251, GB ISSN: 1740-1526, DOI: 10.1038/nrmicro.2017.87

## Description

### FIELD OF THE INVENTION

The present description concerns a phytodepuration system for polluted water. In particular, the present description concerns a system for the biotechnological phytodepuration of polluted water from agriculture, livestock and aquaculture activities.

### TECHNICAL BACKGROUND

Artificial phytodepuration systems are substantially similar to those established spontaneously in marshes and wetlands, in which the biological actions and interactions between hydrophilic plants and the resident microbial communities provide spontaneous auto-depuration of the water. During the gradual flow from the inlet to the outlet of these systems there is a continuous process of filtration and oxidation of suspended organic solids and a decrease in the dissolved salts that can be used by the roots of the aquatic plants present.

Artificial phytodepuration systems (also known as constructed wetlands) are essentially constituted of impermeable tanks containing a filtering bed of porous inert material (such as sand and gravel) on which hydrophilic plants are planted and through which the polluted water is made to flow.

Artificial phytodepuration systems provide more control with respect to natural systems, in that they allow more flexibility in defining the filtering bed, the type of vegetation and the hydraulic pathways. Moreover, such systems provide additional advantages such as site choice and flexibility in the choice of dimensions and geometry, as well as control of flow rates, retention times and pollutant loads, allowing their measurement at the inlet and outlet and the determination of their efficiency.

In particular, the use in filtration beds of materials with diverse physical characteristics (for example, porosity) and of chemically "active" materials (for example zeolites), instead of chemically inert materials such as gravel and sand, and the choice of specific vegetable species, can provide favourable results with decidedly lower depurative surfaces, independently of other input parameters (flow rate, waste characteristics, etc.).

Artificial phytodepuration systems are divided into a) horizontal submerged flow systems (SFS-h or *Subsurface Flow System* - *horizontal*) and b) vertical submerged flow systems (SFS-v or *Subsurface Flow System* - *vertical).*

Artificial phytodepuration systems are known in the art, for example for the documents EP-A-0 390 265, US-A-5 951 866 and DE-A-196 25 328, where such systems envision that the filtration bed is constituted of inert porous materials, such as gravel and clinoptilolite (EP-A-0 390 265), pumice, lava material and/or synthetic or ceramic porous material (US-A-5 951 866) or a mixture of lava material and zeolites (DE-A-196 25 328). In addition, the document EP-A-1 414 756 envisions that the filtration bed consist exclusively of zeolites.

Until now, agro-food wastes for example from the wine, cheese, olive oil, livestock and aquaculture industries are treated using a) methanization procedures, wherein the organic material is stored under anaerobic conditions at a controlled temperature (about 37°C), b) procedures of spreading onto agricultural lands, which are limited by local laws, among other things, c) evaporative procedures that separate the solid from the liquid fractions and where the solid fraction must then be subjected to additional treatments, d) composting procedures. However, these system do not allow the efficient treatment of such wastes because of the particular composition of the wastes themselves and of the operative conditions of the treatment systems themselves.

Oenological wastes, for example generated from the cleaning required for proper winery hygiene, are constituted essentially of wash water that contains solids and liquids that characterise the waste as polluting. Various categories of polluting agents are contained in such waste:
- the residues of by-products transported with the wash: stems, seeds, skins, sediments, lees, tartrate incrustations,
- leakage of products such as: must, wine, both during the various washings and in case of accidental losses,
- products used for the treatment of wine: fining agents, diatomaceous earth, etc., as well as
- products for the washing and disinfection of equipment and surfaces.

The same components of must and wine are also found in oenological waste: sugars, alcohol, esters, glycerol, organic acids (tartaric, malic, lactic, acetic) and phenolic substances.

All of these substances have high chemical oxygen demand (COD) and, with the exception of phenolics, have a good level of biodegradability.

The average chemico-physical characteristics of oenological wastes are reported in table 1, wherein SST stands for total suspended solids.

**Table 1.**

| **OENOLOGICAL WASTES** | |
|---|---|
| **pH** | 4.1-6, occasionally 10-13 in the disincrusting phase |
| **SST** | 1-2 g/l |
| **COD** | 3-20 g of O₂/l |
| **Volume produced** | 30-500 litres per hectolitre of wine produced, 40%-60% of which during the grape harvest |

Industrial milk processing for the production of butter and cheeses also generates considerable quantities of polluting wastes, the principal component of which is whey.

Whey, while being substantially free of toxic agents or inhibitors of bacteria, cannot be released directly into bodies of water due to its elevated organic content and its treatment by means of classical biological depuration systems is difficult and expensive. The principal components of whey from the processing of cow's milk are indicated in table 2.

**Table 2.**

| **WHEY** | |
|---|---|
| **pH** | 4.9-5.8 |
| **SST** | 6.5% |
| **COD** | 30,000-70,000 mg of O₂/l |
| **Lactose** | 4-4.6% |
| **Protein** | 0.65-0.75% |
| **Whey proteins** | 0.55-0.65% |
| **Casein** | 0.05-0.1% |
| **Fats** | 0.06% |
| **Salts** | 0.6-0.7% |
| **Organic acids** | 0.15-0.20% |
| **Ash** | 0.5% |
| **Vitamins** | 12 mg/l |

The composition of wastes generated in the processing of milk for the production of ricotta cheese and butter, called ricotta whey "scotta" and buttermilk, respectively, are reported in tables 3 and 4.

**Table 3.**

| **RICOTTA WHEY "SCOTTA"** | |
|---|---|
| **pH** | 5.6-6.2 |
| **COD** | 10,000-20,000 mg of O₂/l |
| **Total protein** | 0.10-0.15% |
| **Fat** | 0.15-0.30% |
| **Lactose** | 4-4.6% |
| **Salts** | 0.9-1.1% |
| **Organic acids** | 0.20-0.25% |

**Table 4.**

| **BUTTERMILK** | |
|---|---|
| **pH** | 4.5-5.1 |
| **Total protein** | 3.3-3.5% |
| **Fat** | 0.5-0.8% |
| **Lactose** | 4-4.6% |
| **Salts** | 0.7-0.9% |
| **Organic acids** | 0.15-0.20% |
| **Whey proteins** | 0.6-0.7% |
| **Casein** | 2.7-2.8% |

The stretching water, which constitutes the residual waste from the stretching of the curds during the production of mozzarella, contains a high level of sodium chloride and a notable content of citric and lactic acids and is characterised by a high COD of about 2,000-50,000 mg of O₂/l.

The waste produced during olive oil extraction are known as vegetation water and pomace.

The composition of so-called vegetation water in function of the method of extraction used is reported in table 5, where BOD₅ indicates the biological oxygen demand.

**Table 5.**

| **VEGETATION WATER** | | |
|---|---|---|
| | **Continuous process by centrifugation** | **Discontinuous process by pressing** |
| **pH** | 5.1-5.8 | 4.7-5.5 |
| **COD** | 55,000-208,000 mg of O₂/l | 30,000-80,000 mg of O₂/l |
| **BOD₅** | 20,000-90,000 mg of O₂/l | 17,000-42,000 mg of O₂/l |
| **Polyphenols** | 1.2-2.4 | 0.3-0.8 |
| **Water** | 79.85-86.4% | 90.4-96.5% |
| **Organic compounds** | 7.22-18.3% | 2.6-8% |
| **Fatty substances** | 0.02-1% | 0.5-2.3% |
| **Nitrogenous substances** | 1.2-2.4% | 0.17-0.4% |
| **Sugars** | 2-8% | 0.5-2.6% |
| **Organic acids** | 0.5-1.5% | trace |
| **polyalcohols** | 1-1.5% | 0.9-1.4% |
| **Pectins, mucilages, tannins** | 1.3-1.7% | 0.23-0.5% |
| **P₂O₅** | 0.21% | 0.06% |
| **SO₃-SiO₂-FeO-MgO** | 0.09% | 0.02% |
| **K₂O** | 0.71% | 0.19% |
| **Na₂O** | 0.1% | 0.03% |

Regarding the pomace, besides further extraction of oil, it is normally used as fuel due to its considerable caloric value (4,000 kCal/Kg), except when a high percentage of humidity in the dry fraction renders such use inconvenient, in which case it is necessary to treat the pomace as polluting waste.

The pomace cannot be placed into the normal system of superficial water because being the by-product of the production of oil by grinding and pressing olives, it is constituted of seeds, skins and all the other solid parts of the drupe. It consists of 95% water and biomass and about 5% oil, which is recovered by means of extraction with solvents after drying.

The composition of livestock effluents is variable and depends on the species raised, on the breeding techniques, on the method of harvesting and handling the manure.

As a function of the type of housing and management, the effluents can be:
slurries: manure more or less diluted with wash water, water for transport or from leakage of the water system and drinking water overflow.
b) solid material: effluents in solid form that are amenable to the formation of piles.

The chemical characteristics of manures and other shovelable materials produced by diverse species are reported - in general terms - in table 6.

**Table 6.**

| | **Dry material (% t.q.)** | **Volatile solids (% SS)** | **N (Kg/t t.q.)** | **P (Kg/t t.q.)** | **K (Kg/t t.q.)** |
|---|---|---|---|---|---|
| Bovine manure | 20-30 | 75-85 | 3-7 | 0.4-1.7 | 3.3-8.3 |
| Porcine manure | 25 | 70 | 4.7 | 1.8 | 4.5 |
| Porcine manure (deep bed) | 42 | 78 | 8.2 | 9.5 | 12 |
| Ovine manure | 22-40 | 70-75 | 6-11 | 0.7-1.3 | 12-18 |

In view of the peculiarity of wastes produced by agro-food activities, such as wineries, dairy and olive oil processing, and by livestock and aquaculture the known phytodepuration systems do not provide efficacious treatment of such wastes, which - when released from the phytodepuration system - still contain polluting substances frequently with a high chemical oxygen demand (COD) and a high biological oxygen demand (BOD₅) and therefore cannot be released into superficial waters, because they would cause a reduction in the dissolved oxygen in the receiving water, which would be detrimental to the fish fauna, among others.

### SUMMARY OF THE INVENTION

Taking these premises into consideration, the need is therefore felt for improved solutions that allow efficacious phytodepuration of polluted water and, for example, of wastes from wineries, dairy and olive oil processing, livestock and aquaculture.

The object of the present description is that of providing such improved solutions.

According to the invention, the above-said object is obtained by means of the solution specifically recalled in the attached claims, which constitute an integral part of the present description.

One embodiment of the present invention concerns a biotechnological phytodepuration system for polluted waste that comprises a tank containing a filtration bed constituted by a porous material and vegetable species planted on the filtration bed, an inlet for introducing the polluted waste into the tank and an outlet for the release of the depurated waste from the tank, in which the filtration bed is inoculated with a consortium inoculum consisting of:a) symbiont fungi belonging to the genera Glomus spp. and Gigaspora spp.,b) saprophytic fungus belonging to the genus Trichoderma spp., andc) bacteria of the rhizosphere belonging to the genera Bacillus spp., Pseudomonas spp. and Actinomycetales spp.,d) biosurfactant fungi belonging to the genera Acinetobacter spp., Pichia spp., Torulopsis spp., Candida spp., Saccharomyces spp., Schizonella spp., and Ustilago spp., ande) biosurfactant bacteria belonging to the genera Agrobacterium spp., Serratia spp., Flavobacterium spp., Mycobacterium spp., Nocardia spp., Corynebacterium spp., Rhodococcus spp., Arthrobacter spp., Thiobacillus spp., Gluconobacter spp., Aspergillus spp., and Alcanivorax spp.. said consortium permits the reduction of the polluting contents as well as the COD and/or BOD₅ of the treated waste and also limits possible odours caused by aerobic and anaerobic fermentations.

A preferred embodiment of the present invention contemplates a biotechnological artificial phytodepuration system of the horizontal submerged flow (SFS-h) type comprising a filtration bed, preferably of high porosity, comprising at least one from: clay, pyroclastic rock, limestone rock, sepiolite, diatomaceous earth, or mixtures thereof, hydrophilic vegetable species planted on the filtering bed and a consortium of bacteria and fungi periodically inoculated in the filtering bed, wherein such consortium reduces the polluting contents as well as the COD and/or the BOD₅ of the treated waste and also limits possible odours caused by the aerobic and anaerobic fermentations.

The biotechnical phytodepuration system envisions that the consortium of bacteria and fungi inoculated in the filtering bed comprises:
a) at least one symbiont fungus belonging to the genus Glomus spp. or Gigaspora spp.,
b) at least one saprophytic fungus belonging to the genus Trichoderma spp., and
c) at least one bacterium of the rhizosphere selected among the genera *Bacillus* spp., *Pseudomonas* spp. and *Actinomycetales* spp.

Additionally, the bacterial and/or fungal consortium inoculated in the filtering bed comprises
- at least one biosurfactant fungus (or yeast) selected among the genera *Acinetobacter* spp., *Pichia* spp., *Torulopsis spp., Candida spp., Saccharomyces spp., Schizonella spp., Ustilago spp. and*/*or*
- at least one biosurfactant bacterium selected among the genera *Agrobacterium* spp., *Serratia* spp., *Flavobacterium* spp., *Mycobacterium spp., Nocardia spp., Corynebacterium spp., Rhodococcus spp., Arthrobacter spp., Thiobacillus spp., Gluconobacter spp., Aspergillus spp., Alcanivorax spp.*

Additionally, the bacterial and/or fungal consortium inoculated in the filtering bed can advantageously comprise a natural consortium of protozoa of the genus *Vorticella* spp., *Opercularia* spp., *Colpidium* sp., *Satrophilus* sp. and *Cyclidium* sp.

A different embodiment of the present invention concerns a procedure for the biotechnical phytodepuration of polluted waste comprising:
(a) providing a tank;
(b) providing inside the tank a filtering bed constituted of porous material and vegetable species planted on said filtering bed,
(c) passing the polluted waste through the tank, bringing it into contact with the filtering bed to obtain depurated waste;
   in which the procedure envisions the inoculation of the filtering bed with a microorganism consortium comprising:
   i) at least one symbiont fungus of the genus Glomus spp. or Gigaspora spp., and
   ii) at least one saprophytic fungus of the genus Trichoderma spp., and
   iii) at least one bacterium of the rhizosphere selected among the genera *Bacillus* spp., *Pseudomonas* spp. and *Actinomycetales* spp.
   iv) biosurfactant fungi belonging to the genera Acinetobacter spp., Pichia spp., Torulopsis spp., Candida spp., Saccharomyces spp., Schizonella spp., and Ustilago spp., and
   v) biosurfactant bacteria belonging to the genera Agrobacterium spp., Serratia spp., Flavobacterium spp., Mycobacterium spp., Nocardia spp., Corynebacterium spp., Rhodococcus spp., Arthrobacter spp., Thiobacillus spp., Gluconobacter spp., Aspergillus spp., and Alcanivorax spp..

### DETAILED DESCRIPTION OF SOME EMBODIMENTS

The invention will now be described, by way of example only, with reference to the single attached drawing, in which an embodiment of a phytodepuration system according to the present description is illustrated.

In the description that follows, numerous specific details are presented to provide a thorough understanding of the embodiment. The embodiments can be practiced without one or more of the specific details, or with other methods, components, materials, etc. In other instances, well-known structures, materials, or operation are not shown or described in detail to avoid obscuring aspects of the embodiments.

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures or characteristics may be combined in any suitable manner in one or more embodiments.

The headings provided herein are for convenience only and do not interpret the scope or meaning of the embodiments.

The physico-chemical methods most commonly used for treating wastes can be expensive and may not resolve the problem of their depuration.

The present description provides, for the first time, evidence for the advantages in terms of efficacy of the use of integrated systems constituted of microorganisms and detoxifying plants to overcome the limitations inherent in the single approach to phyto purification.

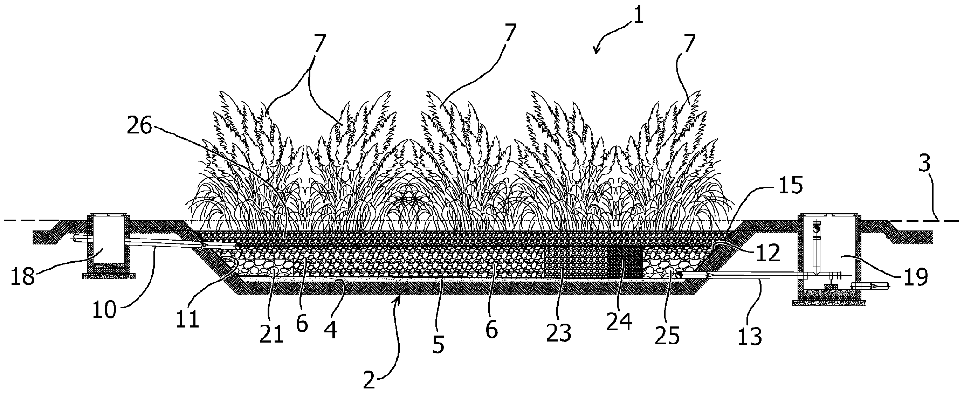

One embodiment of a phytodepuration system according to the present invention is schematically illustrated in the attached figure.

The phytodepuration system, indicated in its entirety with reference 1, comprises a tank 2, having an inlet and an outlet, the inlet being preferably at a height greater with respect to the outlet. Preferably the tank 2 is arranged beneath the level of the soil 3, rendered impermeable on its internal surfaces 4 with a sheet 5 of plastic material (such as, for example EPDM).

The tank 2 contains a filtering bed (or filling substrate) 6 constituted of highly porous material, where in a preferred embodiment such highly porous material consists of a mixture of clay, pyroclastic rock such as pumice, zeolites, limestone rock, diatomaceous earth, and/or sepiolites, where such filtering bed can also assume a structure with vertical and horizontal layers of diverse compositions.

Hydrophilic vegetable species 7 are planted on the filtering bed 6.

In addition, a consortium of fungi and/or bacteria useful for treating waste is periodically inoculated on the filtering bed 6.

Such system operates by submerged horizontal flow (SFS-h), where the waste to be treated is input through an input tube 10, preferably but not necessarily at a proximal extremity 11 of the tank 2, in correspondence with the above-said inlet; the depurated waste is then removed through the above-said outlet, preferably but not necessarily at a distal extremity 12 of the tank 2, by a draining tube 13 after flowing through the filtering bed 6 following a horizontal path favoured by a slight inclination of the bottom of the tank 2. The waste level inside the tank 2 is preferably maintained below the upper surface 15 of the filtering bed 6, at the same time guaranteeing saturation of the filtering bed with the waste. The phytodepuration system is also provided with means for managing the waste flow, which can for example comprise inspection wells 18 and 19. In the example illustrated, the upstream inspection well 18 serves to direct the wastes, also from different origins, downstream or into the tank 2. It is also possible to envision the existence of waste pretreatment systems upstream of the phytodepuration system (Imhoff, septic tanks, sedimentation and separation systems for solids). The downstream inspection well 19 serves for sampling the output treated waste, for draining the tank 2 if needed and for regulating and maintaining the waste level in the tank 2.

The ratio between bed depth, width and length ensures the maximal hydraulic gradient available, necessary to provide adequate movement of the waste from the inlet towards the outlet without return or stagnation of the flow. The tank is gravity fed in a continuous or discontinuous way and normally lifting/pumping systems are not necessary.

A brief description of the various constituent elements of the phytodepuration system object of the present description is provided below.

The internal surface of the tank(s) 2 is impermeabilized using sheets 5 of plastic material such as for example a single piece of EPDM. The choice of a plastic material is based on the following factors:
- Ease of positioning also in the absence of specialised labour. Plastic membranes are available in large dimensions (up to 15 m in width and 60 m in length), with a consequent reduction in joints needed to be made at the worksite and shorter installation time.
- Plastic membranes are extremely flexible even at low temperatures and can stretch by more than 300%, permitting excellent adaptation to possible deformation of the placement site and to any degree of temperature change.
- The plastic membrane is an inert material with minimal environmental impact both in the production and application phases.

The filtering bed 6 has a mean height of 0.45 to 0.85 cm (wetted part from 0.40 to 0.75 m).

The filtering bed 6 is preferably constituted of a mixture of clay, pyroclastic rock (pumice, zeolites, lapilli, etc.), limestone rock, diatomaceous earth and/or sepolite of high porosity (>50%) with a grain-size in the range comprised between 1 mm and 50 mm, preferably between 2 and 30 mm; said mixture comprising preferably clay, pumice, zeolytes, limestone rock and diatomaceous earth.

The filtering bed 6 can envision a structure of vertical and/or horizontal layers. In one embodiment the filtering bed 6 comprises at least two vertical layers and at least on horizontal layer. In the preferred embodiment illustrated, the phytodepuration system described herein comprises a plurality of vertical or flanking layers 21, 22, 23, 24 and 25. Such vertical layers comprising predominantly zeolites and volcanic rock and are arranged longitudinally in succession in decreasing order of grain-size (50-0.2 mm) (layers 21, 22, 23 and 24) substantially from the inlet towards the outlet for approximately two thirds of the length of the tank 2 and then with increasing grain-size (0.2-50 mm) to the outlet (layer 25); the vertical layers 21 to 25 are then preferably covered with a horizontal layer 26 with a height of approximately 15 cm (grain-size 2-4 mm)constituted predominantly of zeolites for absorbing odours and for planting the vegetable species. The superficial layer 26, together with layers 21 to 25, extend longitudinally for substantially the entire length of the tank 2.

The use of different types of constituent materials for the filtering bed (clay, pumice, lapilli, etc.) allow for the constitution of different biological niches, to which different microorganisms in the consortium inoculated in the filtering bed 6 can adapt. This allows the variability of the microbial flora of the niches to be increased, as a function of the different types of substrate used.

The hydrophilic vegetable species 7 planted on the filtering bed 6 are preferably chosen from evergreen and/or vegetable species with a vegetative rest cycle. Among the evergreen vegetable species, *Cladium mariscus* and/or *Scirpus lacustris,* which are active over the entire course of the year, are preferred. Among the vegetable species with a vegetative rest cycle (also known as seasonal) *Arundo donax* (which takes up large quantities of water from the soil to support rapid growth that can reach 5 cm per day in the Springtime), Phragmites australis, Typha latifolia, Typha minima, Typha angustifolia, Juncus spp. and/or Schoenoplectus lacustris are preferred.

The vegetable species are periodically cut, restoring the depurative overall capacity of the system and as a consequence, its efficiency.

In a preferred embodiment, the consortium of fungi and/or bacteria useful for treating wastes inoculated on the filtering bed 6 comprises:
a) at least one symbiont fungus belonging to the genus Glomus spp. or Gigaspora spp.,
b) at least one saprophytic fungus belonging to the genus Trichoderma spp., and
c) at least one bacterium of the rhizosphere selected among the genera *Bacillus* spp., *Pseudomonas* spp. and *Actinomycetales* spp.

The consortium of fungi and/or bacteria also comprises
- at least one biosurfactant fungus (or yeast) selected among the genera *Acinetobacter* spp., *Pichia* spp., *Torulopsis spp., Candida spp., Saccharomyces spp., Schizonella spp., Ustilago spp. and*/*or*
- at least one biosurfactant bacterium selected among the genera *Agrobacterium* spp., *Serratia* spp., *Flavobacterium* spp., *Mycobacterium spp., Nocardia spp., Corynebacterium spp., Rhodococcus spp., Arthrobacter spp., Thiobacillus spp., Gluconobacter spp., Aspergillus spp., Alcanivorax spp.*

The consortium of fungi and/or bacteria can also comprise a natural consortium of protozoa inoculated with 800 g/m² of mud containing protozoa cultivated according to common techniques known in the art.

A natural consortium of protozoa advantageously useful in the context of the present phytodepuration system illustrated herein comprises protozoa, for example, of the genus *Vorticella spp, Opercularia spp., Colpidium sp., Satrophilus sp.* and/or *Cyclidium sp.*

The fungi *Trichoderma spp.* and *Glomus spp.* are particularly useful in that they are capable of degrading branched-chain carbon compounds.

The biosurfactant fungi and/or bacteria, such as for example *Pichia pastoris, Acinetobacter calcoaceticus, Acinetobacter radioresistens, Pseudomonas aeruginosa, Rhodococcus spp., Bacillus subtilis, Candida bombicola, Alcanivorax borkumensis, Alcanivorax venetianus,* are able to render watersoluble the hydrophobic substances contained in the waste to be treated. The presence of such biosurfactant fungi and/or bacteria increases the metabolism of components that cause the high COD and/or BOD₅ of the treated waste, and consequently provide an efficient reduction of those parameters.

The presence of the above-listed yeasts has the dual role of limiting possible odours cased by the aerobic and anaerobic fermentations that take place within the phytodepuration system.

The use of a microorganism consortium according to the present description foresees that the consortium of fungi and/or bacteria are mixed with the top 30 cm of material constituting the filtering bed. The inoculum is composed of 20-30% symbiont fungi and rhizospheric bacteria at 15% of the total. The fungi and rhizospheric bacteria are usually present at a concentration of 1x10⁷ Colony Forming Units (CFU).

The diverse microorganisms (fungi and/or bacteria) inoculated in the filtering bed 6 can constitute different biological niches as a function of the type of material constituting the filtering bed (clay, pumice, zeolites, lapilla, etc.). This increases the variability of the microbial flora in the niches themselves, as a function of the different substrates used. In fact, each microorganism has a preference: for example the *Pseudomonas* favour pyroclastic type rock, while the actinomycetes favour clayey rocks.

It is particularly useful to repeat the inoculation with such consortium and preferably with microorganisms that produce biosurfactant substances, where such repetition is envisioned by means of adding the consortium directly to the waste to be treated every 10 days.

In addition to inoculating the filtering bed 6 with the above-said microbiological consortium, the Applicant has verified that it can be advantageous to inoculate also the vegetable species 7 of the phytodepuration system with a microbiological consortium of the rhizosphere.

The microbiological consortium of the rizosphere is essentially constituted of mycorrhizal fungi, bacteria, actinomycetes, saprophytic fungi and micromycetes. In particular, the plant roots establish symbiotic relationships with mycorrhizal fungi that assist the roots in absorbing nutritional substances and water from the soil and receive necessary sugars from the plant; when in symbiosis with the plant, they amplify the explorative capacity of the roots by approximately 600-800 times, multiplying the normal extension of the root apparatus. The roots also establish a cooperative relationship with bacteria, actinomycetes and saprophytic fungi that metabolise nutritive substances for the plant and live off of root exudates. It has been calculated that approximately 20% of the substances produced by the plant through chlorophyll-based photosynthesis are transported to the roots and used to feed its microbiological consortium.

The vegetable species of the active phytodepuration system described herein can be advantageously inoculated with a microbiological consortium of the rizosphere placed near the roots of the plant at the time of planting on the filtering bed, or at the time of planting, the addition of 30-50 cc/plant of a microbiological consortium of the rizosphere placed near the roots of the plant can be envisioned.

The functioning principle of the phytodepuration system object of the present description envisions the use of a plant capable of metabolising the polluting substances, together with a consortium of fungi and/or bacteria as identified above, which colonises the roots. This combination creates a plant-microbiological consortium system that is very efficient at absorbing and degrading many polluting substances, and optimises the efficiency of the system also for water insoluble compounds. This association allows the *in situ* degradation of numerous pollutants that are resistant to traditional phytodepuration. The result is a general depuration of wastes in the tanks where the appropriately selected plant-microbe system is applied.

Two microbiological consortia are particularly attractive for the efficacy of the phytodepuration system described herein.

A first microbiological consortium (referred to hereinafter as Consortium 1) to inoculate in the filtering bed of the phytodepuration system described herein comprises:
- 30% "crude inoculum", where the expression "crude inoculum" indicates a mixture of shredded roots, spores, mycelium and substrate from a cultivation tank containing spores and mycelium of symbiotic fungi preferably of the genus Glomus (for example G. mosseae, G. viscosum, G. intraradices), capable of stimulating the generation of colony forming points (endomycorrhizal arbuscules) on the roots of the vegetable species 7 at least at 30%.
- saprophytic fungi of the genus *Trichoderma* (for example *T. harzianum*);
- rhizospheric bacteria of the genus *Pseudomonas* spp., *Bacillus* spp. and/or *Actinomycetes* spp.;
- at least one biosurfactant fungus (or yeast) from the genera *Acinetobacter* spp., *Pichia* spp., *Torulopsis spp., Candida spp., Saccharomyces spp., Schizonella spp., Ustilago spp.;*
- at least one biosurfactant bacterium from the genera *Agrobacterium* spp., *Serratia* spp., *Flavobacterium* spp., *Mycobacterium spp., Nocardia spp., Corynebacterium spp., Rhodococcus spp., Arthrobacter spp*., *Thiobacillus spp., Gluconobacter spp., Aspergillus spp., Alcanivorax spp.*
- a natural consortium of protozoa cultivated according to common techniques known in the art.

This first consortium is in the form of powdery granules with a grain-size of 1-3 mm, and must be mixed with the material constituting the filtering bed or inoculated near the roots of the vegetable species planted on the filtering bed.

This consortium is inoculated, as is, into the filtering bed, preferably at a dosage of 7-20 kg/1000m², more preferably at 10-15 kg/1000m².

A second microbiological consortium (referred hereinafter as Consortium 2) to inoculate in the filtering bed of the phytodepuration system and to be used for the periodic reinforcing to maintain the necessary level of rizospheric microorganisms described here comprises:
- 10% crude inoculum (as defined above) capable of stimulating the generation of colony forming points (endomycorrhizal arbuscules) on the roots of the vegetable species 7 at least at 30%.
- saprophytic fungi of the genus *Trichoderma* (for example *T. harzianum*);
- rhizospheric bacteria of the genus *Pseudomonas* spp., *Bacillus* spp. and/or *Actinomycetes* spp.;
- at least one biosurfactant fungus (or yeast) from the genera *Acinetobacter* spp., *Pichia* spp., *Torulopsis spp., Candida spp., Saccharomyces spp., Schizonella spp., Ustilago spp.;*
- at least one biosurfactant bacterium from the genera *Agrobacterium* spp., *Serratia* spp., *Flavobacterium* spp., *Mycobacterium spp., Nocardia spp., Corynebacterium spp., Rhodococcus spp., Arthrobacter spp., Thiobacillus spp., Gluconobacter spp., Aspergillus spp., Alcanivorax spp.*

This second consortium is in the form of a wettable powder (WP) with a grain-size of about 100 pm. It is diluted in an appropriate amount of water and used once every 10 days at a dosage comprised between 200 and 400 g/1000 m² , preferably between 200 and 300 g/1000 m², more preferably between 200 and 220 g/1000 m².

The presence of the above-listed yeasts in the two consortia has the dual role of limiting possible odours caused by the aerobic and anaerobic fermentations.

Naturally, while the principle of invention remains constant, the structural details and the embodiments may vary, even appreciably, with reference to what has been described and illustrated by way of example only, without departing from the scope of the present invention.

## Claims

1. A biotechnological phytodepuration system (1) for polluted water, the system comprising a tank (2) containing a filtering bed (6) constituted of porous material and vegetable species (7) planted out onto said filtering bed (6), an inlet (10) for introduction of polluted water into said tank (2) and an outlet (13) for discharge of depurated water from the tank (2), the system being **characterized in that** said filtering bed (6) contains a microorganism consortium inoculum, said consortium inoculum comprising:
a) symbiont fungi belonging to the genera Glomus spp. and Gigaspora spp.,
b) saprophytic fungus belonging to the genus Trichoderma spp., and
c) bacteria of the rhizosphere belonging to the genera *Bacillus* spp., *Pseudomonas* spp. and *Actinomycetales* spp.,
d) biosurfactant fungi belonging to the genera *Acinetobacter* spp., *Pichia* spp., *Torulopsis spp., Candida spp.*, *Saccharomyces spp., Schizonella spp.,* and *Ustilago spp.*, and
e) biosurfactant bacteria belonging to the genera *Agrobacterium* spp., *Serratia* spp., *Flavobacterium* spp., *Mycobacterium spp., Nocardia spp., Corynebacterium spp., Rhodococcus spp., Arthrobacter spp., Thiobacillus spp., Gluconobacter spp., Aspergillus spp., and Alcanivorax spp..*

2. The system according to any one of the preceding claims, wherein said filtering bed (6) comprises at least one among: clay, pyroclastic rock, limestone rock, diatomaceous earth, sepiolite and/or mixtures thereof.

3. The system according to any one of the preceding claims, wherein said vegetable species (7) are selected among:
- evergreen species selected among *Cladium mariscus,* and *Scirpus lacustris,* and/or
- species with a vegetative rest cycle selected among *Arundo donax, Pragmithes australis, Typha latifolia, Typha minima, Typha angustifolia, Juncus* spp., and *Schoenoplectus lacustris.*

4. The system according to any one of the preceding claims, wherein said filtering bed (6) is constituted of porous material having a porosity greater than 50% and grain-size comprised between 1 and 50 mm, preferably between 1 and 30 mm.

5. The system according to any one of the preceding claims, wherein said filtering bed (6) has a structure comprising horizontal (26) and/or vertical (21, 22, 23, 24, 25) layers.

6. The system according to any one of the preceding claims, wherein said microorganism consortium further contains crushed roots, spores and mycelia of mycorrhizal fungi.

7. The system according to any one of the preceding claims, wherein said microorganism consortium is in form of powdery granules or wettable powder.

8. The system according to claim 7, wherein said microorganism consortium in the form of powdery granules is present into said filtering bed (6) in an amount comprised between 7 and 20 Kg/1000 m², preferably between 10 and 15 Kg/1000 m².

9. The system according to claim 7, wherein said microorganism consortium in the form of wettable powder is present into said filtering bed (6) in an amount comprised between 200 and 400 g/1000 m², preferably between 200 and 300 g/1000 m².

10. A method for the biotechnological phytodepuration of polluted water, comprising:
(a) providing a tank (2);
(b) providing a filtering bed (6) inside the tank (2) constituted of porous material and vegetable species (7) planted out on said filtering bed (6),
(c) passing the polluted water through the tank (2), bringing it into contact with the filtering bed (6) to obtain depurated water;
the method comprising the inoculation of said filtering bed (6) with a consortium of microorganisms comprises:
i) symbiont fungi of the genera Glomus spp. or Gigaspora spp.,
ii) saprophytic fungus of the genus Trichoderma spp.,
iii) bacteria of the rhizosphere belonging to the genera *Bacillus* spp., *Pseudomonas* spp. and *Actinomycetales* spp.,
iv) biosurfactant fungi belonging to the genera *Acinetobacter* spp., *Pichia* spp., *Torulopsis spp., Candida spp., Saccharomyces spp., Schizonella spp., Ustilago spp.,* and
v) biosurfactant bacteria belonging to the genera *Agrobacterium* spp., *Serratia* spp., *Flavobacterium* spp., *Mycobacterium spp., Nocardia spp., Corynebacterium spp., Rhodococcus spp., Arthrobacter spp., Thiobacillus spp., Gluconobacter spp., Aspergillus spp., Alcanivorax spp..*

11. The method according to claim 10, in which the polluted waste is made to pass between an inlet and an outlet of the tank (2) by means of submerged horizontal flow or (SFS-h).

12. The method according to claim 10 or claim 11, wherein said microorganism consortium is periodically inoculated into said filtering bed (6), preferably every 20 days, more preferably every 10 days.

13. The method according to any one of claims 10 to 12, wherein said vegetable species are inoculated with a microbiological consortium of the rhizosphere before or at the moment of planting them out onto the filtering bed (6).

## Patentansprüche

1. Biotechnologisches Pflanzenreinigungssystem (1) für verschmutztes Wasser, wobei das System einen Tank (2), der ein Filterbett (6) enthält, das aus porösem Material und pflanzlichen Spezies (7) besteht, die auf das Filterbett (6) ausgepflanzt sind, einen Einlass (10) zum Einführen von verschmutztem Wasser in den Tank (2) und einen Auslass (13) zum Ausleiten von gereinigtem Wasser aus dem Tank (2) umfasst, wobei das System **dadurch gekennzeichnet ist, dass** das Filterbett (6) ein Inokulum aus einem Mikroorganismenkonsortium enthält, wobei das Konsortium-Inokulum Folgendes umfasst:
a) symbiontische Pilze, die zu den Gattungen *Glomus spp.* und *Gigaspora spp.* gehören,
b) einen saprophytischen Pilz, der zur Gattung *Trichoderma spp.* gehört, und
c) Bakterien der Rhizosphäre, die zu den Gattungen *Bacillus spp., Pseudomonas spp.* und *Actinomycetales spp.* gehören,
d) Biotensid-Pilze, die zu den Gattungen *Acinetobacter spp., Pichia spp., Torulopsis spp., Candida spp., Saccharomyces spp., Schizonella spp.* und *Ustilago spp.* gehören, und
e) Biotensid-Bakterien, die zu den Gattungen *Agrobacterium spp., Serratia spp., Flavobacterium spp., Mycobacterium spp., Nocardia spp., Corynebacterium spp., Rhodococcus spp., Arthrobacter spp., Thiobacillus spp., Gluconobacter spp., Aspergillus spp., Alcanivorax spp.* gehören.

2. System nach einem der vorhergehenden Ansprüche, wobei das Filterbett (6) mindestens eines aus: Ton, pyroklastischem Gestein, Kalkstein, Diatomeenerde, Sepiolit und/oder Mischungen davon umfasst.

3. System nach einem der vorhergehenden Ansprüche, wobei die pflanzlichen Spezies (7) ausgewählt sind aus:
- immergrünen Spezies, ausgewählt aus *Cladium mariscus* und *Scirpus lacustris,* und/oder
- Spezies mit einem Vegatations-Ruhezyklus, ausgewählt aus *Arundo donax, Pragmithes australis, Typha latifolia, Typha minima, Typha angustifolia,* Juncus spp. und *Schoenoplectus lacustris.*

4. System nach einem der vorhergehenden Ansprüche, wobei das Filterbett (6) aus porösem Material mit einer Porosität von mehr als 50 % und einer Korngröße zwischen 1 und 50 mm, vorzugsweise zwischen 1 und 30 mm, besteht.

5. System nach einem der vorhergehenden Ansprüche, wobei das Filterbett (6) eine Struktur aufweist, die horizontale (26) und/oder vertikale (21, 22, 23, 24, 25) Schichten umfasst.

6. System nach einem der vorhergehenden Ansprüche, wobei das Mikroorganismenkonsortium ferner zerkleinerte Wurzeln, Sporen und Myzel von Mykorrhizapilzen enthält.

7. System nach einem der vorhergehenden Ansprüche, wobei das Mikroorganismenkonsortium in Form eines pulverförmigen Granulats oder eines benetzbaren Pulvers vorliegt.

8. System nach Anspruch 7, wobei das Mikroorganismenkonsortium in Form eines pulverförmigen Granulats in einer Menge zwischen 7 und 20 kg/1000 m², vorzugsweise zwischen 10 und 15 kg/1000 m², in dem Filterbett (6) vorhanden ist.

9. System nach Anspruch 7, wobei das Mikroorganismenkonsortium in Form eines benetzbaren Pulvers in einer Menge zwischen 200 und 400 g/1000 m², vorzugsweise zwischen 200 und 300/1000 m², in dem Filterbett (6) vorhanden ist.

10. Verfahren zur biotechnologischen Pflanzenreinigung von verschmutztem Abfall, umfassend:
(a) Bereitstellen eines Tanks (2);
(b) Bereitstellen eines Filterbetts (6) im Innern des Tanks (2), das aus porösem Material und pflanzlichen Spezies (7) besteht, die auf das Filterbett (6) ausgepflanzt sind,
(c) Hindurchleiten des verschmutzten Wassers durch den Tank (2), wodurch es mit dem Filterbett (6) in Kontakt gebracht wird, um gereinigtes Wasser zu erhalten;
wobei das Verfahren das Animpfen des Filterbetts (6) mit einem Mikroorganismenkonsortium, umfassend:
i) symbiontische Pilze, die zu den Gattungen *Glomus spp.* oder *Gigaspora spp.* gehören,
ii) einen aprophytischen Pilz der Gattung *Trichoderma spp.,*
iii) Bakterien der Rhizosphäre, die zu den Gattungen *Bacillus spp., Pseudomonas spp.* und *Actinomycetales spp.* gehören,
iv) Biotensid-Pilze, die zu den Gattungen *Acinetobacter spp., Pichia spp., Torulopsis spp., Candida spp., Saccharomyces spp., Schizonella spp.* und *Ustilago spp.* gehören, und
v) Biotensid-Bakterien, die zu den Gattungen *Agrobacterium spp., Serratia spp., Flavobacterium spp., Mycobacterium spp., Nocardia spp., Corynebacterium spp., Rhodococcus spp., Arthrobacter spp., Thiobacillus spp., Gluconobacter spp., Aspergillus spp., Alcanivorax spp.* gehören, umfasst.

11. Verfahren nach Anspruch 10, wobei der verschmutzte Abfall mithilfe von horizontaler Untergrundströmung oder (SFS-h) zwischen einem Einlass und einem Auslass des Tanks (2) geleitet wird.

12. Verfahren nach Anspruch 10 oder Anspruch 11, wobei das Mikroorganismenkonsortium periodisch, vorzugsweise alle 20 Tage, bevorzugter alle 10 Tage, in das Filterbett (6) angeimpft wird.

13. Verfahren nach einem der Ansprüche 10 bis 12, wobei die pflanzlichen Spezies vor oder zum Zeitpunkt des Auspflanzens auf das Filterbett (6) mit einem mikrobiologischen Konsortium der Rhizosphäre angeimpft werden.

## Revendications

1. Système de phyto-épuration biotechnologique (1) pour eau polluée, le système comprenant un réservoir (2) contenant un lit filtrant (6) constitué de matériau poreux et des espèces végétales (7) plantées sur ledit lit filtrant (6), une entrée (10) pour l'introduction d'eau polluée dans ledit réservoir (2) et une sortie (13) pour l'évacuation d'eau épurée du réservoir (2), le système étant **caractérisé en ce que** ledit lit filtrant (6) contient un inoculum de consortium de micro-organismes, ledit inoculum de consortium comprenant :
a) des champignons symbiotiques appartenant aux genres Glomus spp. et Gigaspora spp.,
b) un champignon saprophyte appartenant au genre Trichoderma spp. et
c) des bactéries de la rhizosphère appartenant aux genres *Bacillus* spp., *Pseudomonas* spp. et *Actinomycetales* spp.,
d) des champignons biotensioactifs appartenant aux genres *Acinetobacter* spp., *Pichia* spp., *Torulopsis* spp., *Candida* spp., *Saccharomyces* spp., *Schizonella* spp. et *Ustilago* spp., et
e) des bactéries biotensioactives appartenant aux genres *Agrobacterium* spp., *Serratia* spp., *Flavobacterium* spp., *Mycobacterium* spp., *Nocardia* spp., *Corynebacterium* spp., *Rhodococcus* spp., *Arthrobacter* spp., *Thiobacillus* spp., *Gluconobacter* spp., *Aspergillus* spp. et *Alcanivorax* spp..

2. Système selon l'une quelconque des revendications précédentes, où ledit lit filtrant (6) comprend au moins une parmi : l'argile, une roche pyroclastique, une roche calcaire, la terre de diatomées, la sépiolite et/ou des mélanges de celles-ci.

3. Système selon l'une quelconque des revendications précédentes, où lesdites espèces végétales (7) sont choisies parmi :
- des espèces persistantes choisies parmi *Cladium mariscus* et *Scirpus lacustris,* et/ou
- des espèces avec un cycle à repos végétatif choisies parmi *Arundo donax, Pragmithes australis, Typha latifolia, Typha minima, Typha angustifolia, Juncus spp.* et *Schoenoplectus lacustris.*

4. Système selon l'une quelconque des revendications précédentes, où ledit lit filtrant (6) est constitué de matériau poreux ayant une porosité supérieure à 50 % et une taille de grains comprise entre 1 et 50 mm, de préférence entre 1 et 30 mm.

5. Système selon l'une quelconque des revendications précédentes, où ledit lit filtrant (6) a une structure comprenant des couches horizontales (26) et/ou verticales (21, 22, 23, 24, 25).

6. Système selon l'une quelconque des revendications précédentes, où ledit consortium de micro-organismes contient en outre des racines écrasées, des spores et des mycéliums de champignons mycorhiziens.

7. Système selon l'une quelconque des revendications précédentes, où ledit consortium de micro-organismes est sous forme de granules pulvérulents ou de poudre mouillable.

8. Système selon la revendication 7, où ledit consortium de micro-organismes sous forme de granules pulvérulents est présent dans ledit lit filtrant (6) en une quantité comprise entre 7 et 20 kg/1000 m², de préférence entre 10 et 15 kg/1000 m².

9. Système selon la revendication 7, où ledit consortium de micro-organismes sous forme de poudre mouillable est présent dans ledit lit filtrant (6) en une quantité comprise entre 200 et 400 g/1000 m², de préférence entre 200 et 300 g/1000 m².

10. Procédé pour la phyto-épuration biotechnologique d'eau polluée, comprenant :
(a) la fourniture d'un réservoir (2) ;
(b) la fourniture d'un lit filtrant (6) à l'intérieur du réservoir (2) constitué de matériau poreux et d'espèces végétales (7) plantées sur ledit lit filtrant (6),
(c) le passage de l'eau polluée à travers le réservoir (2), sa mise en contact avec le lit filtrant (6) pour obtenir de l'eau épurée ;
le procédé comprenant l'inoculation dudit lit filtrant (6) avec un consortium de micro-organismes comprend :
i) des champignons symbiotiques des genres Glomus spp. ou Gigaspora spp.,
ii) un champignon saprophyte du genre Trichoderma spp.,
iii) des bactéries de la rhizosphère appartenant aux genres *Bacillus* spp., *Pseudomonas* spp. et *Actinomycetales* spp.,
iv)des champignons biotensioactifs appartenant aux genres *Acinetobacter* spp., *Pichia* spp., *Torulopsis* spp., *Candida* spp., *Saccharomyces* spp., *Schizonella* spp., *Ustilago* spp., et
v) des bactéries biotensioactives appartenant aux genres *Agrobacterium spp., Serratia spp., Flavobacterium spp., Mycobacterium spp., Nocardia spp., Corynebacterium spp., Rhodococcus spp., Arthrobacter spp., Thiobacillus spp., Gluconobacter spp., Aspergillus spp.* et *Alcanivorax spp..*

11. Procédé selon la revendication 10, dans lequel les déchets pollués sont amenés à passer entre une entrée et une sortie du réservoir (2) au moyen d'un écoulement horizontal immergé ou (SFS-h).

12. Procédé selon la revendication 10 ou la revendication 11, où ledit consortium de micro-organismes est inoculé périodiquement dans ledit lit filtrant (6), de préférence tous les 20 jours, de préférence encore tous les 10 jours.

13. Procédé selon l'une quelconque des revendications 10 à 12, où auxdites espèces végétales est inoculé un consortium microbiologique de la rhizosphère avant ou au moment de leur plantation sur le lit filtrant (6).
